# EUROPÄISCHE PATENTSCHRIFT

(11) **EP 1 319 336 B1**
(45) Veröffentlichungstag und Bekanntmachung des Hinweises auf die Patenterteilung: **23.06.2004**
(21) Anmeldenummer: 02026571.6
(22) Anmeldetag: 28.11.2002
(51) Int. Cl.: A01N 25/04, A01N 25/14

(54) **Verfahren zur Herstellung lösungsmittelfreier Suspensionen**
Method of preparation of solvent-free suspensions
Procédé de préparer des suspensions sans solvant

(30) Priorität: 17.12.2001 DE 10162059
(43) Veröffentlichungstag der Anmeldung: 18.06.2003
(73) Patentinhaber: BASF AKTIENGESELLSCHAFT, 67056 Ludwigshafen (DE)
(72) Erfinder: Bratz, Matthias, Dr., Raleigh, NC 27613 (US); Jäger, Karl-Friedrich, Dr., 67117 Limburgerhof (DE)

(56) Entgegenhaltungen:
- EP-A- 0 145 879
- EP-A- 1 060 667
- US-A- 5 624 884

## Beschreibung

Die vorliegende Erfindung betrifft ein Verfahren zur Herstellung einer lösungsmittelfreien Suspension von niedrigschmelzenden, wasserunlöslichen festen agrochemischen Wirkstoffen, dadurch gekennzeichnet, dass man
a) 1-40 Gew.-% des auf Kieselsäure basierenden Trägerstoffes in Gegenwart von 1-40 Gew.-% eines anionischen Dispergiermittels in 40 bis 97 Gew.-% Wasser suspendiert und
b) die in Schritt a) erhaltene Suspension auf eine Temperatur, die oberhalb der Temperatur des Wirkstoffes liegt, erhitzt und
c) unter Rühren mit 1-25 Gew.-% des geschmolzenen, wasserunlöslichen Wirkstoffes mit einem Schmelzpunkt <80°C oder einer Mischung aus geschmolzenen, wasserunlöslichen Wirkstoffen versetzt, wobei jeder Mischungspartner einen Schmelzpunkt <80°C aufweist, versetzt
wobei die in a) und c) angegebenen Mengen sich zu 100 Gew.-% ergänzen.

Ferner betrifft die Erfindung die Herstellung von Suspensionskonzentraten, wasserdispergierbaren Pulvern und wasserdispergierbaren Granulaten basierend auf den über das oben erwähnte Verfahren hergestellten Suspensionen.

Partikuläre, lösungsmittelfreie Formulierungen sind aufgrund ihrer vorteilhaften Eigenschaften im Pflanzenschutz weit verbreitet. In partikulären Formulierungen liegt der Wirkstoff als definiertes Partikel vor und wird auch nach Zubereiten der Spritzbrühe in verdünnter Form partikulär oder gelöst vorliegen. Man unterscheidet feste Formen wie wasserdispergierbare Granulate (WG-Formulierungen) und wasserdispergierbare Pulver (WP-Formulierungen) sowie fließfähige Formen wie Suspensionskonzentrate (SC-Formulierungen).

Die oben angesprochene Feinteiligkeit ist sowohl für die Lagerstabilität der konzentrierten Handelsprodukte (z. B. SCs) als auch für die Stabilität der aus den entsprechenden Handelsprodukten hergestellten Spritzbrühen essentiell.

Bei der Herstellung von festen Formulierungen (WP, WG) kann die Feinteiligkeit durch das Vermahlen des Wirkstoffs, im allgemeinen zusammen mit Hilfsstoffen, erreicht werden. Hierzu stehen verschiedenen Verfahren zur Verfügung. Man unterscheidet eine Vermahlung im Trockenen z. B. über Hammermühlen oder Luftstrahlmühlen und eine Vermahlung in flüssiger Phase wie z.B. in Rührwerkskugelmühlen. Als flüssige Phase dient meistens Wasser. Um die gewünschte Feinheit zu erreichen, kann es erforderlich sein, die Mühlenpassage mehrmals zu wiederholen.

Allerdings eignet sich das oben beschriebene Verfahren insbesondere für hochschmelzende Wirkstoffe. Für niedrigschmelzende, wasserunlösliche Wirkstoffe, d.h. Wirkstoffe mit einem Schmelzpunkt unterhalb von 80°C und einer Wasserlöslichkeit von weniger als 1000 mg/l bei 20°C sind die oben genannten Prozeduren problematisch, da es bei diesen Wirkstoffen durch den Energieeintrag beim Mahlen oft zu einem partiellen oder vollständigem Schmelzen des Wirkstoffs kommt, was häufig zu einer unbefriedigenden Produktqualität oder zu einer Blockierung der Mühle durch Wirkstoffaggregation führt.

Andere, in der Literatur beschriebenen Verfahren zur Herstellung fester Formulierungen wie WPs oder WGs beinhaltend niedrigschmelzende Wirkstoffe sind wegen der dabei durchzuführenden Arbeitsgänge unvorteilhaft, da hochvolumige Feststoffe mit ungünstigen toxikologischen Eigenschaften in Mischern und Mühlen gehandhabt werden müssen. Dies gilt insbesondere für das Handhabung feinteiliger wirkstoffbeladener Partikel.

So beschreibt WO 93/14632 die Formulierung niedrigschmelzender Wirkstoffe durch innigliche Vermahlung des entsprechenden Wirkstoffes mit einem geeigneten Träger bei gleichzeitig hohem Energieeintrag (high energy milling). Um eine ausreichende Verteilung des geschmolzenen Wirkstoffs auf dem Trägerstoff zu erreichen sind die verwendeten, auf Mineralien oder Ton basierenden Trägerstoffe vorzugsweise pulverförmig und von geringer Teilchengröße. Die erhaltene feste Mischung wird anschließend vermahlen und weiterverarbeitet.

Auch die in EP-A 112438 beschriebenen Verfahren zur Herstellung wasserdispergierbarer Granulate basieren auf Vermischen der festen Ingredientien mit anschließend mehrfachen trockenen Vermahlen.

Ein in DE 4013028 A1 beschriebendes Verfahren basiert darauf, dass der Wirkstoff in organischem Lösemittel erwärmt und zu einer wässrigen Zubereitung enthaltend als festen Trägerstoff Dextrin oder Lactose hinzugefügt wird. Die erhaltene Emulsion wird im Anschluss sprühgetrochnet. Ein Nachteil dieses Verfahrens ist in der Verwendung des zusätzlichen organischen Lösungsmittels und im hohen Preis der zu verwendenden Dextrine zu sehen.

Die Herstellung flüssiger Konzentrate beinhaltend einen niedrigschmelzenden, wasserunlöslichen Wirksstoff erfolgt generell durch Vermahlen des oben genannten Wirkstoffes in Gegenwart diverser Hilfsstoffe sowie Wasser als kontinuierlichem Medium erfolgen (Mollet, H. und Grubemann, A. "Formulierungstechnik", WILEY-VCH, 2000, S. 133 ff.). Dieses in der Praxis gängige Verfahren weist den Nachteil auf, dass der Wirkstoff beim Mahlen und im Verlauf der Lagerung vollständig oder partiell schmilzt, was wiederum die Produktqualität negativ beeinflusst.

Auch alternative, in der Praxis verwendete Verfahren weisen erhebliche Nachteile auf:

So wird in der EP-A 1060667 ein Strom aus geschmolzenem Wirkstoff und Tensid mit einem zweiten Strom (im wesentlichen Wasser) vermischt und im Anschluss in einer Kammer unter Einsatz hoher Scherkräfte vermischt, wobei ein Schmelzen des Wirkstoffes erfolgt. Durch anschließendes Abkühlen entsteht fein dispers verteilter Wirkstoff. Dieses Verfahren ist umständlich, da hier mehrere Schritte sowie ein hoher Energieeintrag erforderlich sind. Ein fester Träger, auf den z.Bsp. der Wirkstoff aufgebracht wird, wird hier nicht verwendet.

Aufgabe der vorliegenden Erfindung ist es, geeignete Verfahren zur Herstellung partikulärer, stabiler Formulierungen speziell für niedrigschmelzende Wirkstoffe zu finden unter Vermeidung des Einsatzes organischer Lösungsmittel.

Die Aufgabe wurde gelöst durch die Bereitstellung eines Verfahrens zur Herstellung einer Suspension von niedrigschmelzenden, wasserunlöslichen festen agrochemischen Wirkstoffen, dadurch gekennzeichnet, dass man
a) 1-40 Gew.-% des auf Kieselsäure basierenden Trägerstoffes in Gegenwart von 1-40 Gew.-% eines anionischen Dispergiermittels in 40 bis 97 Gew.-% Wasser suspendiert und
b) die in Schritt a) erhaltene Suspension erhitzt und
c) unter Rühren mit 1-25 Gew.-% des geschmolzenen, wasserunlöslichen Wirkstoffes mit einem Schmelzpunkt <80°C oder einer Mischung aus geschmolzenen, wasserunlöslichen Wirkstoffen versetzt, wobei jeder Mischungspartner einen Schmelzpunkt <80°C aufweist, versetzt
wobei die in a) und c) angegebenen Mengen sich zu 100 Gew.-% ergänzen. Weiterhin enthält die erfindungsgemäße suspension mindestens 40 Gew.-% Wasser.

Unter einem wasserunlöslichen Wirkstoff ist hier ein Wirkstoff zu verstehen mit Wasserlöslichkeit von weniger als 1000 mg/l bei 20°C.

Hierbei wird die Suspension in Schritt b) auf eine Temperatur, die mindestens 5°C, bevorzugt 10°C besonders bevorzugt 20°C oberhalb der Temperatur des Wirkstoffes liegt, erhitzt.

Die Menge an Wirkstoff, der in Schritt c) hinzugefügt wird, beträgt 1-25 Gew.-%, vorzugsweise 2-20 Gew%, besonders bevorzugt 4-10 Gew.-% bezogen auf die Gesamtmischung.

Das Rühren in Schritt c) kann mittels üblicher Rührer, z.B. Dissolver oder Rotor-Stator-Mischer erreicht werden.

Die nach dem oben beschriebenen Verfahren hergestellten Suspensionen sind ebenfalls Gegenstand der vorliegenden Erfindung und werden im folgenden als "erfindungsgemäße Suspensionen" bezeichnet.

Die erfindungsgemäßen Suspensionen dienen als Ausgangsbasis für die Herstellung von SCs, WGs und WPs, sind lagerstabil und müssen nicht direkt weiterverarbeitet werden.

Die folgende Liste zeigt Beispiele für geeignete Wirkstoffe a) auf, ist aber nicht auf diese beschränkt:

Aus der Klasse der Fungizide sind beispielhaft folgende Wirkstoffe zu nennen:
cyprodinil, dinocap, dodemorph, dodemorph acetate, fenpropidin, fenpropimorph, flusilazole, imazalil, myclobutanil, nitrothal-isopropyl, penconazole, propamocarb hydrochloride, Pyraclostrobin, spiroxamin und Trifloxystrobin, Propiconazol.

Aus der Klasse der Herbizide sind beispielhaft folgende Wirkstoffe zu nennen:
benfluralin, bromoxynil, clodinafop-propargyl, cyhalofop-butyl, dinoterb, DNOC, ethofumesate,flamprop-M-isopropyl, flufenacet, fluoroglycofen-ethyl, flurochloridone, fluroxypyr-meptyl, haloxyfop-etotyl, haloxyfop-methyl, ioxynil octanoate, napropamide, Oxyfuorifen, pendimethalin, Propanil, pyridate, quizalofop-P-ethyl, quizalofop-P-tefuryl, trifluralin;

Aus der Klasse Insektizide sind beispielhaft folgende Wirkstoffe zu nennen:
alpha-cypermethrin, anilofos, azinphos-ethyl, azinphos-methyl, Benzoximate, beta-cypermethrin, Chlorpyrifos, cypermethrin, deltamethrin, dimethylvinphos, DNOC, endosulfan, esfenvalerate, fenoxycarb, fenvalerate, methoxychlor, metolcarb, monocrotophos, phosmet, pyridaphenthion, resmethrin, silafluofen, tetramethrin, thiofanox, triazamate, trichlorfon, xylylcarb

Hierbei sind folgede Wirkstoffe a) bevorzugt: Pyraclostrobin, pendimethalin, Propanil, Chlorpyrifos, Trifloxystrobin und Propiconazol.

Besonders bevorzugt als Wirkstoff a) ist Pyraclostrobin.

Für die Herstellung der erfindungsgemäßen Suspensionen geeignete auf Kieselsäure basierenden Trägerstoffe sind natürliche oder synthetische Kieselsäuren, wobei synthetische Kieselsäuren bevorzugt sind. Hierbei handelt es sich im Allgemeinen um sogenannte hydrophile Fällungskieselsäuren oder pyrogene Kieselsäuren. Kommerziell erhältlich sind besagte Kieselsäuren beispielsweise unter den Handelsnamen Sipernat®, Wessalon® oder Aerosil® der Fa. Degussa.

Für die Herstellung der erfindungsgemäßen Suspensionen geeignete Dispergiermittel sind anionische Tenside.

Geeignete anionische Tenside sind beispielsweise Alkylarylsulfonate, Phenylsulfonate, Alkylsulfate, Alkylsulfonate, Alkylethersulfate, Alkylarylethersulfate, Alkylpolyglykoletherphosphate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff, Lignin-Sulfit-Ablauge und Ligninsulfonate, einschließlich ihrer Alkali-, Erdalkali-, Ammonium- und Amin-Salze, Alkylphosphate sowie Polycarboxylate wie z.Bsp. Polyacrylate, Maleinsäureanhydrid/Olefin-Copolymere (z.Bsp. Sokalan®CP9, BASF).

Bevorzugt ist hierbei die Verwendung von Ligninsulfonaten wie Kraftligninen oder Ligninsulfonaten aus dem sogenannten Sulfitablaugeverfahren z.B. kommerziell erhältlich unter folgenden Handelsnamen: Borresperse®, Vanisperse®, Ufoxane®, Diwotex® (Fa. Borregard Lignotech) und Reaxx®, Kraftsperse®, Polyfon® (Fa. Westvaco Corp.) sowie von Naphthalinsulfonsäure-Kondensationsprodukten mit Formaldeyhd z.B. kommerziell erhältlich unter folgenden Handelsnamen: Tamol NN, Tamol NH (BASF AG) oder Morwet D 425 (Witco/Crompton Corp.) und Kondensations-produkte aus Phenolsulfonsäure, Formaldehyd und Harnstoff, z. B. erhältlich unter dem Handelsnamen Tamol DN (BASF AG).

Weiterer Gegenstand der Erfindung ist die Herstellung von agrochemischen Formulierungen, nämlich Suspensionkonzentraten (SCs), wasserdispergierbaren Pulver (WPs) oder wasserdispergierbaren Granulate (WGs) basierend auf den erfindungsgemäßen Suspensionen.

Die Herstellung von SCs erfolgt durch Versetzen der erfindungsgemäßen Suspension mit einem oder mehreren weiteren agrochemischen Wirkstoffen und/oder weiteren für die Herstellung eines Suspensionskonzentrates geeigneten Formulierungshilfsmitteln. Für die Herstellung eines Suspensionskonzentrates geeignete Formulierungshilsfmittel sind Tenside, Andicker, Antischaummittel, Bakterizide und Frostschutzmittel, die in folgendenMengen bezogen auf die Gesamtmenge des hergestellten SC's eingesetzt werden:

| | |
|---|---|
| Tenside | 4.0 bis 25-Gew.% |
| Andicker | 0.1 bis 5 -Gew.% |
| Antischaummittel | 0.1 bis 5 -Gew.% |
| Bakterizide | 0.1 bis 1 -Gew.% |
| Frostschutzmittel | 1.0 bis 20 -Gew.%% |

Gegebenenfalls können die erfindungsgemäßen SC-Formulierungen 1-5 Gew.% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z.B. Phosphorsäure, Borsäure, Essigsäure, Propionsäure, Citronensäure, Fumarsäure, Weinsäure, Oxalsäure und Bernsteinsäure.

Die zugesetzte Menge an weiterem Wirkstoff bzw. weiteren Wirkstoffen kann 1-60 Gew.-%, vorzugsweise 5-50 Gew.-% bezogen auf die Gesamtmenge des hergestellten SC's betragen.

Falls erforderlich wird die erhaltene Mischung bis zu der gewünschten Teilchengröße vermahlen. Das Vermahlen kann in einer Mühle z.Bsp. Rührwerks-Kugelmühle erfolgen. Weitere geeignete Mühlen sind in Mollet, H. und Grubemann, A. "Formulierungstechnik", WILEY-VCH, 2000, S. 138ff erwähnt. Um die gewünschte Feinheit zu erreichen, kann es gegebenenfalls erforderlich sein, die Mühlenpassage mehrmals zu wiederholen.

Ist die gewünschte Kornverteilung von vorzugsweise 40% kleiner als 2 Mikron und 100% kleiner als 12 Mikron erreicht, kann das erhaltene SC mit thixotropen Agentien versetzt werden.

Geeignete Tenside sind anionische Tenside und nichtionische Tenside, bevorzugt sind Gemische aus beiden.

Geeignete anionische Tenside sind die bereits bei der Herstellung der erfindungsgemäßen Suspensionen oben erwähnten Verbindungen.

Geeignete nichtionische Tenside sind beispielsweise Alkylphenolalkoxylate, Alkoholalkoxylate, Fettaminalkoxylate, Polyoxyeethylenglycerolfettsäureester, Rizinusölalkoxylate, Fettsäurealkoxylate, Fettsäureamidalkoxylate, Fettsäurepolydiethanolamide, Lanolinethoxylate, Fettsäurepolyglykolester, Isotridecylalkohol, Fettsäureamide, Methylcellulose, Fettsäureester, Silicon-Öle, Alkylpolyglykoside, Glycerolfettsäureester, Polyethylenglykol, Polypropylenglykol, Polyethylenglykolpolypropylenglykol-Blockcopolymere, Polyethylenglykolalkylether, Polypropylenglykolalkylether, Polyethylenglykolpolypropylenglykolether-Blockcopolymere und deren Gemische.

Bevorzugte nichtionische Tenside sind Polyethylenglykolpolypropylenglykol-Blockcopolymere, Polyethylenglykolalkylether, Polypropylenglykolalkylether, Polyethylenglykolpolypropylenglykolether-Blockcopolymere und deren Gemische.

Für die oben genannten Formulierungstypen geeignete die Viskosität verändernde Additive sind Verbindungen, die der Formulierung ein pseudoplastisches Fließverhalten verleihen, d.h. hohe Viskosität im Ruhezustand und niedrige Viskosität im bewegten Zustand. Hier sind beispielsweise Polysaccharide bzw. organische Schichtmineralien wie Xanthan Gum® (Kelzan® der Fa. Kelco), Rhodopol® 23 (Rhone Poulenc) oder Veegum® (Firma R.T. Vanderbilt) oder Attaclay® (Firma Engelhardt) zu nennen, wobei Xanthan-Gum® bevorzugt verwendet wird.

Als für die erfindungsgemäßen Formulierungen geeignete Antischauaunittel kommen beispielsweise Silikonemulsionen (wie z.Bsp. Silikon® SRE, Firma Wacker oder Rhodorsil® der Firma Rhodia), langkettige Alkohole, Fettsäuren, fluororganische Verbindungen und deren Gemische in Betracht.

Bakterizide können zur Stabilisierung der wäßrigen Fungizid-Formulierung zugesetzt werden. Geeignete Bakterizide sind beispielsweise Proxel® der Fa. ICI oder Acticide® RS der Fa. Thor Chemie und Kathon® MK der Firma Rohm & Haas.

Geeignete Frostschutzmittel sind z.Bsp. Ethylenglycol, Propylenglycol oder Glycerin.

Zur Herstellung von WP-Formulierungen basierend auf den erfindungsgemäßen Suspensionen kann man
a) eine erfindungsgemäße Suspension mit einem oder mehreren weiteren agrochemischen Wirkstoffen und/oder weiteren für die Herstellung eines wasserdispergierbaren Pulver geeigneten Formulierungshilfsmitteln vermischen, und
b) die in Schritt a) erhaltene Suspension trocknen und zu einem wasserdispergierbaren Pulver weiterverarbeiten.

Unter für die Herstellung eines wasserdispergierbaren Pulver geeigneten Formulierungshilfsmittel sind Tenside und Antischaummittel zu vestehen, die in folgenden Mengenverhältnissen bezogen auf die Gesamtmenge des hergestellten WP's eingesetzt werden:

| | |
|---|---|
| Tenside | 0 bis 50 -Gew.% |
| Antischaummittel | 0 bis 5 -Gew.% |

Gegebenenfalls können die erfindungsgemäßen WP-Formulierungen 1-5 Gew.% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z.B. Phosphorsäure, Borsäure, Essigsäure, Propionsäure, Citronensäure, Fumarsäure, Weinsäure, Oxalsäure und Bernsteinsäure.

Die zugesetzte Menge an weitern Wirkstoff bzw. weiteren Wirkstoffen kann bezogen auf die Gesamtmenge des hergestellten WP's 1-60 Gew.-%, vorzugsweise 5-50 Gew.-% betragen.

Geeignete Tenside und Antischaumittel sind bereits ebenfalls oben erwähnt.

Falls erforderlich wird die in a) erhaltene Mischung bis zu der gewünschten Teilchengröße, d.h. einer Kornverteilung von vorzugsweise von 40% kleiner als 2 Mikron und 100% kleiner als 12 Mikron, nach den oben beschriebenen Prozeduren vermahlen.

Das in Schritt b) erwähnte Trocknen kann nach dem Fachman bekannten Prozeduren erfolgen, wie beispielsweise Sprühtrocknung. Hierbei sei auf K. Masters, spray drying (G. Goodwin Ltd. Ed. London 1979 verwiesen. Zum Sprühen werden vorzugsweise Zweistoffdüsen und Zentrifugalzerstäuber verwendet.

Zur Herstellung von WG-Formulierungen basierend auf den erfindungsgemäßen Suspensionen kann man
a) eine erfindungsgemäße Suspension mit einem oder mehreren weiteren agrochemischen Wirkstoffen und/oder weiteren für die Herstellung eines wasserdispergierbaren Granulates geeigneten Formulierungshilfsmitteln vermischen , und
b) die in Schritt a) erhaltene Suspension mittels eines Trocknungsverfahren zu einem wasserdispergierbaren Granulat weiterverarbeiten.

Geeignete, in Schritt a) erwähnten Formulierungshilfsmittel sind Tenside und Antischaummittel, die in folgenden Mengenverhältnissen bezogen auf die Gesamtmenge des hergestellten WG's eingesetzt werden:

| | |
|---|---|
| Tenside | 0 bis 50 -Gew.% |
| Antischaummittel | 0 bis 5 -Gew.% |

Gegebenenfalls können die erfindungsgemäßen WG-Formulierungen 1-5 Gew.% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z.B. Phosphorsäure, Borsäure, Essigsäure, Propionsäure, Citronensäure, Fumarsäure, Weinsäure, Oxalsäure und Bernsteinsäure.

Geeignete Tenside und Antischaumittel sind bereits oben erwähnt.

Die zugesetzte Menge an weiterem Wirkstoff bzw. weiteren Wirkstoffen kann bezogen auf die Gesamtmenge des hergestellten WG's 1-60 Gew.-%, vorzugsweise 5-50 Gew.-% betragen.

Falls erforderlich wird die in a) erhaltene Mischung bis zu der gewünschten Teilchengröße, d.h. einer Kornverteilung von vorzugsweise 40% kleiner als 2 Mikron und 100% kleiner als 12 Mikron, nach den oben beschriebenen Prozeduren vermahlen.

Für die Herstellung von WGs geeingete Trocknungsverfahren können beispielsweise in Analogie zu den in Rosch, R. Probst, Verfahrenstechnik 9 (1975), Nr.2 beschriebenen Verfahren mittels Sprühtrocknung und Wirbelschichtgranulation erfolgen. Bei der Sprühtrocknung werden zur Herstellung von WG-Formulierungen vorzugsweise Einstoffdüsen verwendet.

Alternativ kann die Herstellung eines wasserdispergierbaren Granulates aus einem wie oben beschrieben hergestellten WP erfolgen, wobei das WP mit Wasser benetzt wird, und anschließend mittels Extrusions- und Tellergranulierverfahren granuliert wird z.B. in Analogie zu den in M. Dittgen et al., Pharmazie 35, 4 (1980) S. 237ff beschriebenen Verfahren.

Zur Vergrößerung des Wirkungsspektrums können die vorstehend genannten Formulierungen wie bereits erwähnt mit weiteren agrochemischen Wirkstoffen kombiniert werden, die im letzteren Fall mit geeigneten Additiven eingearbeitet werden können. Hierbei ist unter dem Begriff Additiv eine Auswahl aus den oben genannten Tensiden und weiteren Hilfstoffen zu verstehen. Bei der SC-Formulierung können zusätzliche Wirkstoffe in der wässrigen Phase gelöst oder in fein vermahlener Form suspendiert vorliegen. Im Falle einer WP oder WG-Formulierung sind ein oder mehrere Wirkstoffe, die während der oben genannten Herstellungsverfahren der erfindungsgemäßen Suspension zugefügt wurden, in der WP- bzw. WG-Formulierung homogen verteilt.

Hierbei kann der zusätzliche Wirkstoff bzw. die zusätzlichen Wirkstoffe aus der Gruppe der Fungizide, Insektizide, Herbizide und/oder Wachstumsregulatoren ausgewählt werden.

Beispiele für fungizide Wirkstoffe sind:
Schwefel, Dithiocarbamate und deren Derivate, wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat ,Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarbamoyl)disulfid;
Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;
heterocyclische Substanzen, wie 2-Heptadecyl-2-imidazolin-acetat, 2-Chlor-N-(4'-chlor-biphenyl-2-yl)-nicotinamid, 2,4-Dichlor-6-(o-chloranilino)-s-triazin, O,O-Diethyl-phthalimidophosphonothioat, 5-Amino-1-[bis-(dimethylamino)-phosphinyl]-3-phenyl-1,2,4- triazol, 2,3-Dicyano-1,4-dithioanthrachinon,
2-Thio-1,3-dithiolo[4,5-b]chinoxalin, 1-(Butylcarbamoyl)-2-benzimidazol-carbaminsäuremethylester, 2-Methoxycarbonylamino-benzimidazol, 2-(Furyl-(2))-benzimidazol, 2-(Thiazolyl-(4))-benzimidazol, N-(1,1,2,2-Tetrachlorethylthio)-tetrahydrophthalimid,
N-Trichlormethylthio-tetrahydrophthalimid, N-Trichlormethylthiophthalimid,
N-Dichlorfluormethylthio-N',N'-dimethyl-N-phenyl-schwefelsäurediamid, 5-Ethoxy-3-trichlormethyl-1,2,3-thiadiazol, 2-Rhodanmethylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxanilido-6-methyl-1,4 -oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 2-Methyl-benzoesäure-anilid, 2-Iod-benzoesäure-anilid, N-Formyl-N-morpholin-2,2,2-trichlorethylacetal, Piperazin-1,4-di-ylbis-1-(2,2,2-trichlorethyl)-formamid, 1-(3,4-Dichloranilino)-1-formylamino-2,2,2-trichlorethan, 2,6-Dimethyl-N-tridecyl-morpholin bzw. dessen Salze, 2,6-Dimethyl-N-cyclododecyl-morpholin 1-[2-(2,4-Dichlorphenyl)-4-ethyl-1,3-dioxolan-2-yl-methy1]-1H-1,2,4-triazol, 1-[2-(2,4-Dichlorphenyl)-4-n-propyl-1,3-dioxolan-2-yl-ethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol,
Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,
Phenylpyrrole wie 4-(2,2-Difluor-1,3-benzodioxol-4-yl)-pyrrol-3-carbonitril,
Zimtsäureamide wie 3-(4-Chlorphenyl)-3-(3,4-dimethoxyphenyl)-acrylsäuremorpholid, 3-(4-Fluorphenyl)-3-(3,4-dimethoxyphenyl)-acrylsäuremorpholid,
sowie verschiedene Fungizide, wie Dodecylguanidinacetat, 1-(3-Brom-6-methoxy-2-methyl-phenyl)-1-(2,3,4-trimethoxy-6-methyl-phenyl)-methanon, 3-[3-(3,5-Dimethyl-2-oxycyclohexyl)-2-hydroxyethyl]-glutarimid, Hexachlorbenzol, DL-Methyl-N-(2,6-dimethyl-phenyl)-N-furoyl(2)-alaninat, DL-N-(2,6-Dimethyl-phenyl)-N-(2'-methoxyacetyl)-alanin-methyl-ester,
N-(2,6-Dimethylphenyl)-N-chloracetyl-D,L-2-aminobutyrolacton, DL-N-(2,6-Dimethylphenyl)-N-(phenylacetyl)-alaninmethylester, 5-Methyl-5-vinyl-3-(3,5-dichlorphenyl)-2,4-dioxo-1,3-oxazolidin, 3-(3,5-Dichlorphenyl)-5-methyl-5-methoxymethyl-1,3-oxazolidin-2,4-dion, 3-(3,5-Dichlorphenyl)-1-isopropylcarbamoylhydantoin,
N-(3,5-Dichlorphenyl)-1,2-dimethylcyclopropan-1,2-dicarbonsäureimid, 2,4-Difluor-α-(1H-1,2,4-triazolyl-1-methyl)-benzhydrylalkohol, N-(3-Chlor-2,6-dinitro-4-trifluormethyl-phenyl)-5-trifluormethyl-3-chlor-2-aminopyridin, 1-((bis-(4-Fluorphenyl)-methylsilyl)-methyl)-1H-1,2,4-triazol, 5-Chlor-2-cyano-4-p-tolyl-imidazol-1-sulfonsäuredimethylamid, 3,5-Dichlor-N-(3-chlor-1-ethyl-1-methyl-2-oxo-propyl)-4-methylbenzamid;
Strobilurine wie Methyl-E-methoxyimino-[α-(o-tolyloxy)-o-tolyl]acetat, Methyl-E-2-{2-[6-(2-cyanophenoxy)-pyrimidin-4-yloxy]-phenyl}-3-methoxyacrylat, Methyl-E-methoxyimino-[a-(2-phenoxyphenyl)]-acetamid , Methyl-E-methoxyimino-[α-(2,5-dimethylphenoxy)-o-tolyl]-acetamid, Methyl-E-2-{2- [2-trifluormethylpyridyl-6-] oxymethyl]-phenyl]3-methoxyacrylat, (E)-o-(2,5-dimethylphenoxymethyl)-2-methoxyimino-N-methylphenylacetamid; und
Nicotinsäureanilid-Derivaten der Formel I: 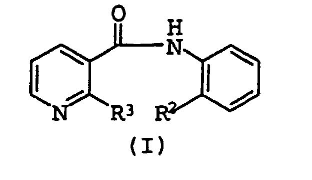 worin
- R²: für Phenyl steht, das durch Halogenatome wie Fluor, Chlor und/oder Brom substituiert ist, wobei eine einfach bis dreifach Substitution bevorzugt ist;
- R³: für Halogen steht, wobei unter Halogen Fluor, Chlor oder Brom, besonders bevorzugt Chlor zu verstehen ist;

Ein besonders bevorzugtes Nicotinsäureanilid-Derivat der Formel I ist nicobifen.

Die Herstellung der Verbindungen der Formel I ist beispielsweise aus der EP-A-545 099 oder EP-A-589 301 bekannt oder kann nach analogen Verfahren erfolgen.

Folgende Insektizide können verwendet werden:
Neonicotinoide/Chlornicotinyl-Verbindungen (wie Imidacloprid, Acetamiprid, Nitenpyram, Thiacloprid, Thiamethoxam, MIT-446 (Terafuranitdine)
Pyrrole (wie Chlorphenapyr, Fludioxonil)
Organophosphate (wie Acephate, Dimethoate, Disulfoton Fosthiazate, Methamidophos, Methidathion, Methyl-Parathion, Oxydemetonmethyl, Phorate, Phosalone, Profenofos, Malathion, Phosphamidon, Fenitrothion, Diazinon, EPN)
Carbamate (wie Alanycarb, Aldicarb, Benfuracarb, Carbofuran, Carbosulfan, Furathiocarb, Methomyl, Oxamyl, Pirimicarb, Thiodicarb, Fenobucarb)
Pyrethroide (wie Bifenthrin, Cyfluthrin, Ethofenprox, Fenpropathrin, Flucythrinate, Fluvalinate, Lambda-Cyhalothrin, Permethrin, Pyrethrin I, Pyrethrin II, Tau-Fluvalinate, Tralomethrin, Zeta-Cypermethrin)
Harnstoffderivate (wie Diflubenzuron, Flucycloxuron, Flufenoxuron, Hexaflumuron, Lufenuron, Novaluron, Triflumuron
Juvenuide (wie Buprofezin, Diofenolan, Pyriproxifen, Methoxyfenozide, Tebufenozide)
Verschiedene (wie Abamectin, Spinosad, Amitraz, Cartap, Chlorfenapyr, Diafenthiuron, Fipronil, Imidacloprid, Pyridaben, Tebufenpyrad, Nidinotefuran (MTI-446), (The 1998 Brighton Conference "Pest and Diseases", Conference Proceedings, Vol 1, page 81, Fe-nazaquin, Fenpyroxymate, Thiocyclam), Nidinotefuran (MTI-446) und Clothionidin ((E)-1-(2-chlorothiazol-5ylmethyl)-3-methyl-2-nitroguanidine (TI-435; Takeda, Japan)).

### Beispiele für herbizide Wirkstoffe sind

1,3,4-Thiadiazole (wie buthidazole, cyprazole),
Amide (wie allidochlor (CDAA), benzoylprop-ethyl, bromobutide, chlorthiamid, dimepiperate, dimethenamid, s-dimethenamid, diphenamid, etobenzanid (benzchlomet), fluthiamide, fosamin, isoxaben, monalide, naptalame, pronamid (propyzamid))
Aminophosphorsäuren (wie bilanafos, (bialaphos), buminafos, glufosinate-ammonium, glyphosate, sulfosate),
Aminotriazole (wie amitrol) Anilide (wie mefenacet), Aryloxyalkansäuren (wie 2,4-D, 2,4-DB, clomeprop, dichlorprop, dichlorprop-p, dichlorprop-p (2,4-DP-P), fenoprop (2,4,5-TP), fluoroxypyr, MCPA, MCPB, mecoprop, mecoprop-P, napropanilide, triclopyr, N-(1-Cyano-1,2-dimethylpropyl)-2-(2,4-dichlorphenoxy)propionamide),
Benzoesäuren (wie chloramben, dicamba), Benzothiadiazinonen (wie bentazon),
Bleacher (wie clomazone (dimethazone), diflufenican, fluorochloridone, flupoxam, fluridone, pyrazolate, sulcotrione (chlormesulone), isoxaflutole, isoxachlortole, mesotrione) Carbamate (wie asulam, barban, butylate, carbetamid, chlorbufam, chlorpropham, cycloate, desmedipham, diallate, EPTC, esprocarb, molinate, orbencarb, pebulate, phenisopham, phenmedipham, propham, prosulfocarb, pyributicarb, sulfallate (CDEC), terbucarb, thiobencarb (benthiocarb), tiocarbazil, triallate, vernolate)
Chinolincarbonsäuren (wie quinclorac, quinmerac),
Chloracetanilide (wie acetochlor, alachlor, butachlor, butenachlor, diethatyl ethyl, dimethachlor, metazachlor, metolachlor, pretilachlor, propachlor, prynachlor, terbuchlor, thenylchlor, xylachlor, s-metolachlor),
Cyclohexenone (wie alloxydim, tepraloxydim, clethodim, cloproxydim, cycloxydim, sethoxydim, tralkoxydim, 2-{1-[2-(4-Chlorphenoxy)propyloxyimino]butyl}-3-hydroxy-5-(2H-tetrahydrothiopyran-3-yl)-2- cyclohexen-1-on, butroxydim, clefoxydim), Dichlorpropionsäuren (wie dalapon)
Dihydrofuran-3-one (wie flurtamone)
Dinitroaniline (wie benefin, butralin, dinitramin, ethalfluralin, fluchloralin, isopropalin, nitralin, oryzalin, prodiamine, profluralin)
Dinitrophenole (wie bromofenoxim, dinoseb, dinoseb-acetat),
Diphenylether (wie acifluorfen-sodium, aclonifen, bifenox, chlornitrofen (CNP), difenoxuron, ethoxyfen, fluorodifen, fomesafen, furyloxyfen, lactofen, nitrofen, nitrofluorfen, oxyfluorfen),
Dipyridylene (wie cyperquat, difenzoquat-methylsulfat, diquat, paraquat dichlorid)
Harnstoffe (wie benzthiazuron, buturon, chlorbromuron, chloroxuron, chlortoluron, cumyluron, dibenzyluron, cycluron, dimefuron, diuron, dymron, ethidimuron, fenuron, fluormeturon, isoproturon, isouron, karbutilat, linuron, methabenzthiazuron, metobenzuron, metoxuron, monolinuron, monuron, neburon, siduron, tebuthiuron, trimeturon)
Imidazole (wie isocarbamid)
Imidazolinone (wie imazamethapyr, imazapyr, imazaquin, imazethabenz-methyl (imazame), imazethapyr, imazapic),
Oxadiazole (wie methazole, oxadiargyl, oxadiazon)
Oxirane (wie tridiphane)
Phenoxyphenoxypropionsäureester (wie cloquintocet, cyhalofopbutyl, diclofop-methyl, fenoxaprop-ethyl, fenoxaprop-p-ethyl, fenthiapropethyl, fluazifop-butyl, fluazifop-p-butyl, isoxapyrifop, propaquizafop)
Phenylessigsäuren (wie chlorfenac (fenac))
Phenylpropionsäuren (wie chlorfenprop-methyl)
Protoporphyrinogen-IX-Oxydase-Hemmer (wie benzofenap, cinidonethyl, flumiclorac-pentyl, flumioxazin, flumipropyn, flupropacil, fluthiacet-methyl, pyrazoxyfen, sulfentrazone, thidiazimin, carfentrazone)
Pyrazole (wie nipyraclofen, ET 751)
Pyridazine (wie chloridazon, maleic hydrazide, norflurazon) Pyridincarbonsäuren (wie clopyralid, dithiopyr, picloram, thiazopyr, diflufenzopyr)
Pyrimidylether (wie pyrithiobac-säure, pyrithiobac-sodium, KIH-2023, KIH-6127, pyribenzoxym)
Sulfonamide (wie flumetsulam, metosulam)
Sulfonylharnstoffe (wie amidosulfuron, azimsulfuron, bensulfuronmethyl, chlorimuron-ethyl, chlorsulfuron, cinosulfuron, cyclosulfamuron, ethametsulfuron methyl, ethoxysulfuron, flazasulfuron, halosulfuron-methyl, imazosulfuron, metsulfuron-methyl, nicosulfuron, primisulfuron, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]amino]carbonyl]-2-(trifluoromethyl)-Benzenesulfonamide, sulfosulfuron, idosulfuron)
Triazine (wie ametryn, atrazin, aziprotryn, cyanazine, cyprazine, desmetryn, dimethamethryn, dipropetryn, eglinazin-ethyl, hexazinon, procyazine, prometon, prometryn, propazin, secbumeton, simazin, simetryn, terbumeton, terbutryn, terbutylazin, trietazin) Triazinone (wie ethiozin, metamitron, metribuzin) Triazolcarboxamide (wie triazofenamid)
Uracile (wie bromacil, lenacil, terbacil)

Verschiedene Herbizide (wie benazolin, benfuresate, bensulide, benzofluor, butamifos, cafenstrole, chlorthal-dimethyl (DCPA), cinmethylin, dichlobenil, endothall, fluorbentranil, mefluidide, perfluidone, piperophos, flucabazone, oxaciclomefone (MY 100))

Die folgende Liste von Verbindungen mit wachstumsregulatorischer Wirkung zeigt mögliche Wirkstoffe auf, soll aber nicht auf diese beschränkt sein:

1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Chlormequat, Clofencet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Gibberellic acid, Gibberellin, Guazatin, Indolylbuttersäure, Indolylessigsäure, Karetazan, Kinetin, Lactidichlor-ethyl, Maleic hydrazide, Mefluidide, Mepiquat-chlorid, Naptalam, Paclobutrazole, Prohexadione calcium, Quinmerac, Sintofen, Tetcyclacis, Thidiazuron, Triiodobenzoicacid, Triapenthenol, Triazethan, Tribufos, Trinexapac-ethyl,Uniconazole.

Besonders bevorzugt wird der zusätzliche Wirkstoff bzw. die zusätzlichen Wirkstoffe aus folgender Gruppe von Wirkstoffen ausgewählt:
Carbendazim, Thiophanate-Methyl, Epoxiconazol, Metconazol, Prochloraz, Propiconazol, Quinoxyfen, Folpet, Dithianon, Captan, Dimethomorph, IKF 916, Iprovalicarb, Proazolthion, Metiram, Mancozeb, Kresoxim-Methyl, Azoxystrobin, Picoxystrobin, (E)-o-(2,5-dimethylphenoxymethyl)-2-methoxyimino-N-methylphenylacetamid und Nicotinsäureanilidderivate der Formel I wie nicobifen, wobei ganz besonders bevorzugt (E)-o-(2,5-dimethylphenoxymethyl)-2-methoxyimino-N-methylphenylacetamid, Nicotinsäureanilidderivate der Formel I wie nicobifen, Folpet, Metiram, Dithianon und Dimethomorph verwendet werden.

Weiterer Gegenstand der vorliegenden Erfindung ist ein Verfahren zur Regulation des Wachstums von Pflanzen, zur Bekämpfung unerwünschtem Pflanzenwuchs, unerwünschtem Insekten- oder Milbenbefall und/oder ein Verfahren zur Bekämpfung von phytopathogenen Pilzen.

Unter phytopathogenen Pilzen bekämpfbar durch die erfindungsgemäßen Formulierungen sind beispielsweise folgende Spezies zu verstehen:
*Alternaria*-Arten, *Podosphaera-Arten, Sclerotinia-*Arten, *Physalospora canker* an Gemüse und Obst, *Botrytis cinerea* (Grauschimmel) an Erdbeeren, Gemüse, Zierpflanzen und Reben, *Corynespora melonis* an Gurken, Erdbeeren; *Colletotrichum*-Arten an Gurken; *Diplocarpon rosae* an Rosen; *Elsinoe fawcetti* und *Diaporthe citri* an Citrus-Früchten; *Sphaerotheca*-Arten an Gurken, Kürbisgewächsen, Erdbeeren und Rosen; *Cercospora*-Arten an Erdnüssen, Zuckerrüben, Eierpflanzen und Dattelpflaumen; *Erysiphe cichoracearum* und *Sphaerotheca fuliginea* an Kürbisgewächsen, *Leveiillina taurica* an Piment; *Mycosphaerella*-Arten an Äpfeln und Japanischer Aprikose; *Phyllactinia kakicola*, *Gloesporium kaki,* an Japanischer Aprikose; *Gymnosporangium yamadae*, *Leptotthrydium pomi, Podosphaera leucotricha* und *Gloedes pomigena* an Äpfeln; *Cladosporium carpophilum* an Birnen und Japanischer Aprikose; *Phomopsis*-Arten an Birnen; *Phytophthora*-Arten an Citrus Früchten, Kartoffeln, Zwiebeln; *Phytophthora infestans* an Kartoffeln und Tomaten, *Erysiphe graminis* (echter Mehltau) an Getreide, *Fusarium-* und *Verticillium*-Arten an verschiedenen Pflanzen, *Glomerella cingulata* an Tee; *Helminthosporium-*Arten an Getreide, *Mycosphaerella-*Arten an Bananen und Erdnüssen, *Plasmopara viticola* an Reben und Grapefruits, *Peronospora*-Arten an Zwiebeln, Spinat und Chrysantemen; *Phaeoisariopsis vitis* und *Spaceloma ampelina* an Grapefruits; *Pseudocercosporella herpotrichoides* an Weizen und Gerste, *Pseudoperonospora*-Arten an Hopfen und Gurken, *Puccinia*-Arten und *Typhula*-Arten an Getreide, *Pyricularia oryzae* an Reis, *Rhizoctonia*-Arten an Baumwolle, Reis und Rasen, *Septoria nodorum* an Weizen, *Uncinula necator* an Reben, *Ustilago*-Arten an Getreide und Zuckerrohr, sowie *Venturia*-Arten (Schorf) an Äpfeln und Birnen.

Unter Insekten bekämpfbar durch die erfindungsgemäßen Formulierungen sind beispielsweise Insekten
aus der Ordnung *Lepidoptera* (Schmetterlinge und Motten) beispielsweise *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana*, *Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella*, *Lithotis blancardella, Lobesia botrana, Loxostege sticticalis*, *Lymantria dispar, Lymantria monacha, Lyonetia clerkella,* *Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plu*tella *xylostella, Pseudoplusia includens, Rhyacionia* frustrana, *Scrobipalpula absoluta, Sitotroga cerealella, Sparganothis pilleriana*, *Spodoptera frugiperda, Spodoptera littoralis, Spodoptera litura, Thaumatopoea pityocampa, Tortrix viridana, Trichoplusia ni* und *Zeiraphera canadensis,*
aus der Ordnung *Coleoptera* (Käfer), z.B. *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa*, *Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus und Sitophilus granaria*,
aus der Ordnung der *Diptera* (Zweiflügler), z.B. *Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifo lii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea und Tipula paludosa,*
aus der Ordnung *Thysanoptera,* z.B. *Frankliniella fusca, Frankliniella occidentalis, Frankliniella tritici, Scirtothrips citri, Thrips oryzae, Thrips palmi* und *Thrips tabaci,*
aus der Ordnung *Hymenoptera,* z.B. *Athalia rosae, Atta cephalotes, Atta sexdens, Atta texana, Hoplocampa minuta, Hoplocampa testudinea, Monomorium pharaonis, Solenopsis geminata und Solenopsis invicta,*
aus der Ordnung *Heteroptera,* z.B. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis* und *Thyanta perditor,*
aus der Ordnung *Homoptera,* z.B. *Acyrthosiphon onobrychis, Adelges laricis, Aphidula nasturtii, Aphis fabae, Aphis pomi, Aphis sambuci, Brachycaudus cardui, Brevicoryne brassicae, Cerosipha gossypii, Dreyfusia nordmannianae, Dreyfusia piceae, Dysaphis radicola, Dysaulacorthum pseudosolani, Empoasca fabae, Macrosiphum avenae, Macrosiphum euphorbiae, Macrosiphon rosae, Megoura viciae*, *Metopolophium dirhodum, Myzodes persicae, Myzus cerasi, Nilaparvata lugens, Pemphigus bursarius, Perkinsiella saccharicida, Phorodon humuli, Psylla mali, Psylla piri, Rhopalomyzus ascalonicus, Rhopalosiphum maidis, Sappaphis mala, Sappaphis mali, Schizaphis graminum, Schizoneura lanuginosa, Trialeurodes vaporariorum* und *Viteus vitifolii,*
aus der Ordnung *Isoptera,* z.B. *Calotermes flavicollis, Leucotermes flavipes, Reticulitermes lucifugus und Termes natalensis,*
aus der Ordnung *Orthoptera,* z.B. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana*, *Schistocerca americana, Schistocerca peregrina, Stauronotus maroccanus* und *Tachycines asynamorus,*
aus der Ordnung *Acari,* z.B. *Amblyomma americanum, Amblyomma variegatum, Argas persicus, Boophilus annulatus, Boophilus decoloratus*, *Boophilus microplus, Brevipalpus phoenicis, Bryobia* prae*tiosa, Dermacentor silvarum, Eotetranychus carpini, Eriophyes sheldoni, Hyalomma truncatum, Ixodes ricinus, Ixodes rubicundus, Ornithodorus moubata, Otobius megnini, Paratetranychus pilosus, Dermanyssus gallinae, Phyllocoptruta oleivora, Polyphagotarsone* *mus latus, Psoroptes ovis, Rhipicephalus appendiculatus, Rhipicephalus evertsi, Sarcoptes scabiei, Tetranychus cinnabarinus, Tetranychus kanzawai, Tetranychus pacificus, Tetranychus telarius* und *Tetranychus urticae,*
aus der Ordnung der Nematoden wie Wurzelgallennematoden, z.B. Me*loidogyne hapla, Meloidogyne incognita, Meloidogyne javanica,* Zysten bildende Nematoden, *z.B. Globodera rostochiensis, Heterodera avenae, Heterodera glycines, Heterodera schachtii, Heterodera trifolii,* Stock- und Blattälchen, *z.B. Belonolaimus longicaudatus, Ditylenchus destructor, Ditylenchus dipsaci, Heliocotylenchus multicinctus, Longidorus elongatus, Radopholus similis, Rotylenchus robustus, Trichodorus primitivus, Tylenchorhynchus claytoni, Tylenchorhynchus dubius, Pratylenchus neglectus, Pratylenchus penetrans, Pratylenchus curvitatus* und *Pratylenchus goodeyi.*

Die Regulation des Wachstums von Pflanzen kann durch die bereits weiter oben erwähnten Wachstumsregulatoren erfolgen oder durch den Einsatz von Dünger.

Unter der Bekämpfung unerwünschten Pflanzenwuches ist die Vernichtung von Unkräutern zu verstehen. Unter Unkraut im weitesten Sinne sind alle Pflanzen zu verstehen, die an Orten aufwachsen, an denen sie unerwünscht sind, zum Beispiel:
Dikotyle Unkräuter der Gattungen: *Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.*
Monokotyle Unkräuter der Gattungen: *Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera.*

Des weiteren können die erfindungsgemäßen Formulierungen in einer weiteren Zahl von Kulturpflanzen zur Beseitigung unerwünschter Pflanzen eingesetzt werden. In Betracht kommen beispielsweise folgende Kulturen:
*Allium cepa, Ananas comosus, Arachis hypogaea, Asparagus officinalis, Beta vulgaris spec. altissima, Beta vulgaris spec. rapa, Brassica napus var.* napus, *Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota*, *Elaeis guineensis, Fragaria vesca, Glycine max, Gossypium hirsutum, (Gossypium arboreum, Gossypium herbaceum, Gossypium vitifolium), Helianthus annuus*, *Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum* durum, *Vicia faba, Vitis vinifera, Zea mays.*

Eine bevorzugte Ausführungsform des oben genannten Verfahrens ist ein Verfahren zur Bekämpfung von phytopathogenen Pilzen.

Alle vorstehend genannten Verfahren zur Regulation des Wachstums von Pflanzen und/oder zur Bekämfung unerwünschten Pflanzenwuches und/oder zur Bekämpfung von unerwünschtem Insekten- oder Milbenbefall und/oder zur Bekämpfung von phytopathogenen Pilzen, können dadurch realisiert werden, daß man eine erfindungsgemäße Suspension in Form eines Suspensionskonzentrates, eines wasserdispergierbaren Pulvers oder wasserdispergierbaren Granulates formuliert und eine wirksame Menge der hergestellten Formulierung auf unerwünschte Pflanzen und/oder auf Pflanzen oder Saatgüter zur Regulation des Wachstums und/oder auf den jeweiligen Schädling, die vor dem jeweiligen Schädling zu schützenden Materialen, Pflanzen, Böden oder Saatgüter appliziert. Die Formulierung der erfindungsgemäßen Suspensionen als SC-, WP- oder WG-Formulierung ist obenstehend beschrieben.

Hierbei kann die Applikation der erfindungsgemäßen Züsammensetzugen nach dem Fachmann bekannten Prozeduren erfolgen.

So kann die beispielsweise die Applikation der erfindungsgemäßen Zusammensetzugen enthaltend herbizide Wirkstoffe im Vorauflauf- oder im Nachauflaufverfahren erfolgen. Sind die entsprechenden Wirkstoffe für gewisse Kulturpflanzen weniger verträglich, so können Ausbringungstechniken angewandt werden, bei welchen die verdünnten SC- bzw. SE-Formulierungen mit Hilfe der Spritzgeräte so gespritzt werden, daß die Blätter der empfindlichen Kulturpflanzen nach Möglichkeit nicht getroffen werden, während die herbiziden Wirkstoffe auf die Blätter darunter wachsender unerwünschter Pflanzen oder die unbedeckte Bodenfläche gelangen (post-directed, lay-by).

Die Applikation der erfindungsgemäßen Zusammensetzungen enthaltend fungizide Wirkstoffe kann curativ, eradikativ oder protektiv erfolgen.

Die Aufwandmengen an Wirkstoff betragen je nach Bekämpfungsziel, Jahreszeit, Zielpflanzen und Wachstumsstadium 0.001 bis 10kg/ha, vorzugsweise 0.01 bis 5 kg/ha.

Im folgenden wird das erfindungsgemäße Verfahren anhand von Beispielen erläutert, ist aber nicht auf diese beschränkt:

### Beispiel 1 Herstellung der erfindungsgemäßen Suspensionen

Die Handelsnamen der für die im Nachfolgenden beschriebenen erfindungsemäßen Suspensionen und Formulierungen verwendeten Hilfstoffe sind in Tabelle 1 zusammengefasst.

**Tabelle 1**

| **Name** | **chem. Bezeichnung** | **Bezugsquelle** |
|---|---|---|
| Ufoxane® 3A | Ligninsulfonat | Borregard Lignotech |
| Wettol® D1 | Kondensationsprodukt ans Phenolsulfonsäure, Harnstoff und Formaldehyd | BASF Aktiengesellschaft |
| Tamol® NH | Kondensationsprodukt ans Phenolsulfonsäure, Harnstoff und Formaldehyd | BASF Aktiengesellschaft |
| Diwatex® 200 | Ligninsulfonat | Borregard Lignotech |
| Sipernat® FK 350 | Kieselsäure | Degussa |
| Sipernat® 22 | Kieselsäure | Degussa |
| Pluronic® PE 10500 | EO/PO-Blockcopolymer | BASF Aktiengesellschaft |
| Kelzan® | Xanthan Gum | Kelco |
| Silikon® SRE | Silikonölemulsion | Wacker Chemie |
| Proxel® GXL | wässrige Dipropylenglycol Lösung enthaltend 20% 1,2-Benzisothiazolin-3-on | ICI |

### A) Herstellung eines Konzentrats mit einem Wirkstoffgehalt von 15 Gew.-%

645 g Wasser wurden mit 150 g Sipernat® FK 350 und 53 g Ufoxane® 3A vermischt und auf 80°C erwärmt. Unter Rühren (Disperserscheibe 1800 U/Min) erfolgte die Zugabe von 152g geschmolzenen Pyraclostrobins (98%) über einen Zeitraum von 5 min mit anschließender 30 minütiger Inkubation bei gleicher Rührgeschwindigkeit. Nach Entfernen der Heizquelle wurde die hergestellte Suspension unter Rühren auf Raumtemperatur abgekühlt.

### B) Herstellung von Konzentraten mit einem Wirkstoffgehalt von ca. 20 Gew.-%

Nach der im folgenden erläuterten Vorschrift wurden die in Tabelle 2 aufgeführten erfindungsgemäßen Suspensionen S-1 bis S-6 hergestellt.

600 g Wasser wurden mit 150g Kieselsäure (s. Tabelle 2) und 53g Dispergiermittel (s. Tabelle 2) vermischt und auf 80°C erwärmt. Unter Rühren (Disperserscheibe 1800 U/Min) erfolgte die Zugabe von 200g geschmolzenen Pyraclostrobins (98%) über einen Zeitraum von 5 Min. mit anschließender 30 minütiger Inkubation bei gleicher Rührgeschwindigkeit. Nach Entfernen der Heizquelle wurde die hergestellte Suspension unter Rühren auf Raumtemperatur abgekühlt.

**Tabelle 2**

| **Ansatz Nr.** | **Kieselsäure** | **Dispergiermittel** |
|---|---|---|
| S-1 | Sipernat® FK350 | Ufoxane®3A |
| S-2 | Sipernat® FK350 | Wettol® D1 |
| S-3 | Sipernat® FK350 | Diwotex® 200 |
| S-4 | Sipernat®22 | Wettol® D1 |
| S-5 | Sipernat®22 | Diwatex® 200 |
| S-6 | Sipernat® FK350 | Diwatex® 200 |

### Beispiel 2 Herstellung von Suspensionskonzentraten

### Allgemeine Herstellungsvorschrift

In einem Gefäß wurden ca. 200ml Wasser mit den in Tabelle 3 angegebenen Mengen an Wettol D1, 30g Pluronic® PE 10500, 70g Propylenglykol und Fumarsäure versetzt und homogenisiert. Zu dieser Mischung wurde der zweite Wirkstoff hinzugefügt und anschließend mit einer der in Beispiel 1 B) hergestellten erfindungsgemäßen Suspensionen S-1 bis S-6 versetzt. Mittels einer Rührwerkskugelmühle wird die hergestellte Suspension vermahlen, falls erforderlich mit 25 Gew.-% NaOH auf pH 6 eingestellt und mit der in Tabelle 3 aufgeführten Menge an Xanthan Gum angedickt, welches in 15 ml Wasser vordispergiert wurde. Abschließend wurde das Volumen der Suspension mit Wasser auf 1000 ml aufgefüllt.

Nach der oben stehenden Herstellungsvorschrift wurden sechs Suspensionskonzentrate, SC-1 bis SC-6 hergestellt deren Zusammensetzung in Tabelle 3 aufgeführt ist.

**Tabelle 3**

| Zusammensetzung der Formulierungen SC Nr. 1-6 | | | | | |
|---|---|---|---|---|---|
| Nr | Wettol D1 [g] | Fumarsäure [g] | Xanthan Gum | Ansatz aus Tab.2 | Wirkstoff 2 |
| SC-1 | 19 | 12 | 3 | 1 | 400g Folpan |
| SC-2 | 19 | 12 | 3 | 2 | 400g Folpan |
| SC-3 | 19 | 12 | 3 | 3 | 400g Folpan |
| SC-4 | 19 | 12 | 3 | 4 | 400g Folpan |
| SC-5 | 19 | 12 | 3 | 5 | 400g Folpan |
| SC-6 | 20 | - | 1 | 6 | 200g 2-Chloro-N-(4'-chlorobiphenyl-2-yl) -nicotinamid |
| SC-7 | 20 | - | 1 | 2 | 200g 2-Chloro-N-(4'-chlorobiphenyl-2-yl) -nicotinamid |

### Beispiel 3 Physikochemische Eigenschaften der hergestellten Formulierungen und Vergleichsversuche

Die hergestellten Formulierungen wurden im Folgenden bezüglich Dispersionsstabilität untersucht (CIPAC-Methode, MT 180). Die Ergibnisse sind in Tabelle 4 zusammenstellt.

**Tabelle 4**

| Bezeichnung (aus Tabelle 3) | Dispersionsstabilität [ml Niederschlag] | | | |
|---|---|---|---|---|
| | direkt nach Herstellung | 1 Monat Lagerzeit | | |
| | 20°C | 20°C | 40°C | 50°C |
| SC-1 | < 0,05 | 0,4 | 4,5 | 2,8 |
| SC-3 | < 0,05 | 0,2 | 0,2 | 0,15 |
| SC-2 | < 0,05 | 0,15 | 0,05 | 0,3 |
| SC-4 | < 0,05 | < 0,05 | 0,1 | 0,25 |
| SC-5 | < 0,05 | < 0,05 | 0,2 | 0,25 |
| SC-6 | 0,15 | < 0,05 | 0,3 | 0,5 |
| SC-7 | 0,4 | < 0,05 | < 0,05 | 0,2 |

### Beispiel 4 Herstellung von WG's

### A)WG enthaltend Pyraclostrobin und Metiram

In einem Behälter wird eine Mischung aus 4700g Wasser, 40g Silikon® SRE, 966g Ufoxane®3A, 483 Tamol®NH und 3040g Metiram unter Rühren hergestellt und mit 1760g einer erfindungsgemäßen Suspension hergestellt in Analogie zu der Herstellungsvorschrift in Beispiel 1A bestehend aus 15,9 Gew.-% Pyraclostrobin, 15,9 Gew.-% Ufoxane®3A, 6,3 Gew.-% Sipernat®FK350 versetzt und anschließend auf einer Perlmühle gemahlen. Nach Zusatz von 380g Formaldehydlösung (40%) wird die Mischung mittels Sprühtrocknung in einem Technikumssprühturm (Fa. Niro) mit Einstoffdüse bei einer Turmeingangstemperatur von 170°C getrocknet. Es entsteht ein wasserdispergierbares Granulat.

### B) WG enthaltend Pyraclostrobin und 2-Chloro-N-(4'-chloro-biphenyl-2-yl)-nicotinamid

In einem Behälter wurde eine Mischung aus 5860g Wasser, 500g Ammoniumsulfat, 40g Silikon®SRE, 1490g Ufoxane®3A, 746 Tamol®NH und 1330g 2-Chloro-N-(4'-chloro-biphenyl-2-yl)-nicotinamid unter Rühren hergestellt und mit 2390g einer erfindungsgemäßen Suspension hergestellt in Analogie zu der in Beispiel 1A aufgeführten Vorschrift bestehend aus 14 Gew.-% Pyraclostrobin, 14 Gew.-% Ufoxane® 3A und 5,5 Gew.-% Sipernat®FK350 versetzt und anschließend auf einer Perlmühle gemahlen. Drei Viertel der gemahlenen Mischung wurde danach mittels Sprühtrocknung in einem Technikumssprühturm (Fa. Niro) mit Einstoffdüse bei einer Turmeingangstemperatur von 170°C der Luft getrocknet. Ein Viertel der gemahlenen Mischung wUrde mittels Wirbelschichtgranulation in einem Technikumswirbelschichtgranulator (Firma Aeromatic) bei 120°C Eingangstemperatur der Luft getrocknet. Bei beiden Verfahren entstehen wasserdispergierbare Granulate.

### C) WG enthaltend Pyraclostrobin und Dimethomorph

In einem Behälter wurde eine Mischung aus 2230g Wasser, 500g Kaolin, 20g Silikon® SRE, 829g Tamol®NH, 415g Ufoxane®3A und 309g Dimethomorph unter Rühren hergestellt und mit 1197g eines erfindungsgemäßen Suspensionskonzentrates hergestellt in Analogie zu der in Beispiel 1A aufgeführten Vorschrift bestehend aus 14 Gew.-% Pyraclostrobin, 14 Gew.-% Ufoxane®3A und 5,5 Gew.-% Sipernat®FK350 versetzt und anschließend auf einer Perlmühle gemahlen. Drei Viertel dergemahlenen Mischung wurde danach mittels Sprühtrocknung in einem Technikumssprühturm (Fa. Niro) mit Einstoffdüse bei einer Turmeingangstemperatur von 170°C der Luft getrocknet. Ein Viertel der gemahlenen Mischung wurde mittels Wirbelschichtgranulation in einem Technikumswirbelschichtgranulator (Firma Aeromatic) bei 120°C Eingangstemperatur der Luft getrocknet. Bei beiden Verfahren entstehen wasserdispergierbare Granulate.

## Patentansprüche

1. Verfahren zur Herstellung einer Suspension von niedrigschmelzenden, wasserunlöslichen festen agrochemischen Wirkstoffen, **dadurch gekennzeichnet, dass** man
a) 1-40 Gew.-% eines auf Kieselsäure basierenden Trägerstoffes in Gegenwart von 1-40 Gew.-% eines anionischen Dispergiermittels in 40 bis 97 Gew.-% Wasser suspendiert und
b) die in Schritt a) erhaltene Suspension auf eine Temperatur, die oberhalb der Temperatur des Wirkstoffes liegt, erhitzt und
c) unter Rühren mit 1-25 Gew.-% des geschmolzenen, wasserunlöslichen Wirkstoffes mit einem Schmelzpunkt <80°C oder einer Mischung aus geschmolzenen, wasserunlöslichen Wirkstoffen versetzt, wobei jeder Mischungspartner einen Schmelzpunkt <80°C aufweist, versetzt
wobei die in a) und c) angegebenen Mengen sich zu 100 Gew.-% ergänzen.

2. Verfahren nach Anspruch 1, **dadurch gekennzeichnet, dass** man den Wirkstoff aus Schritt c) auswählt aus der Gruppe bestehend aus flufenacet, cyprodinil, dinocap, DNOC, dodemorph, dodemorph acetate, fenpropidin, fenpropimorph, flusilazole, imazalil, myclobutanil, nitrothal-isopropyl, penconazole, propamocarb hydrochloride, pyraclostrobin, spiroxamin, benfluralin, bromoxynil, clodinafop-propargyl, cyhalofop-butyl,dinoterb, DNOC, ethofumesate, fluoroglycofen-ethyl, flurochloridone, fluroxypyr-meptyl, haloxyfop-etotyl, haloxyfop-methyl, ioxynil octanoate, napropamide, Oxyfuorifen, pendimethalin, Propanil, pyridate, quizalofop-P-ethyl, quizalofop-P-tefuryl, trifluralin, alpha-cypermethrin, anilofos, azinphos-ethyl, azinphos-methyl, Benzoximate, beta-cypermethrin, Chlorpyrifos, cypermethrin, deltamethrin, dimethylvinphos, endosulfan, esfenvalerate, fenoxycarb, fenvalerate, flamprop-M-isopropyl, methoxychlor, metolcarb, monocrotophos, phosmet, pyridaphenthion, resmethrin, silafluofen, tetramethrin, thiofanox, triazamate, trichlorfon, Trifloxystrobin und xylylcarb.

3. Verfahren nach Anspruch 1, **dadurch gekennzeichnet, dass** man den Wirkstoff aus Schritt c) auswählt aus der Gruppe bestehend aus pendimethalin, propanil pyraclostrobin und trifloxystrobin verwendet.

4. Suspension erhältlich über das Verfahren nach den Ansprüchen 1 bis 3.

5. Suspension nach Anspruch 4, **dadurch gekennzeichnet, dass** man als Trägerstoff eine Fällungskieselsäure verwendet.

6. Suspension nach Anspruch 4, **dadurch gekennzeichnet, dass** man das Dispergiermittel aus der Gruppe der Ligninsulfonate, der Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff auswählt.

7. Verfahren zur Herstellung eines Suspensionkonzentrates, **dadurch gekennzeichnet, dass** man eine Suspension nach den Ansprüchen 4 bis 6 mit einem oder mehreren weiteren agrochemischen Wirkstoffen und/oder weiteren für die Herstellung eines Suspensionskonzentrates geeigneten Formulierungshilfsmitteln vermischt.

8. Verfahren zur Herstellung eines wasserdispergierbaren Pulvers, **dadurch gekennzeichnet**,
a) dass man eine Suspension nach den Ansprüchen 4 bis 6 mit einem oder mehreren weiteren agrochemischen Wirkstoffen und/oder weiteren für die Herstellung eines wasserdispergierbaren Pulvers geeigneten Formulierungshilfsmitteln vermischt, und
b) die in Schritt a) erhaltene Mischung trocknet und zu einem wasserdispergierbaren Pulver weiterverarbeitet.

9. Verfahren zur Herstellung eines wasserdispergierbaren Granulates, **dadurch gekennzeichnet, dass** man
a) eine Suspension nach den Ansprüchen 4 bis 6 mit einem oder mehreren weiteren agrochemischen Wirkstoffen und/oder weiteren für die Herstellung eines wasserdispergierbaren Granulates geeigneten Formulierungshilfsmitteln vermischt, und
b) die in Schritt a) erhaltene Mischung mittels eines Trocknungsverfahren zu einem wasserdispergierbaren Granulat weiterverarbeitet.

10. Verfahren nach den Ansprüchen 7 bis 9, **dadurch gekennzeichnet, dass** man als weiteren agrochemischen Wirkstoff eine oder mehrere Verbindungen ausgewählt aus der Gruppe bestehend aus Carbendazim, Thiophanate-Methyl, Epoxiconazol, Metconazol, Prochloraz, Propiconazol, Quinoxyfen, Folpan, Captan, Dimethomorph, Kresoxim-Methyl, Azoxystrobin, Picoxystrobin, IKF 916, Iprovalicarb, Proazolthion, Metiram, Mancozeb, Dithianon, Cyprodinil, (E)-o-(2,5-dimethylphenoxymethyl)-2-methoxyimino-N-methylphenylacetamid und
Nicotinsäureanilid-Derivaten der Formel II 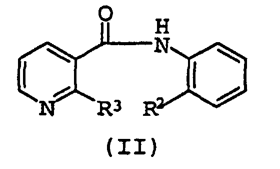 worin
R² für halogensubstituiertes Phenyl steht; und
R³ für Halogen steht, verwendet.

11. Verfahren nach den Ansprüchen 7 bis 9, **dadurch gekennzeichnet, dass** man als weiteren agrochemischen Wirkstoff eine oder mehrere Verbindungen ausgewählt aus der Gruppe bestehend aus Folpan, Captan, Metiram, Mancozeb, Dithianon, Dimethomorph und Nicotinsäureanilid-Derivaten gemäß Anspruch 10, verwendet.

12. Verfahren zur Regulation des Wachstums von Pflanzen und/oder zur Bekämfung unerwünschten Pflanzenwuches und/oder zur Bekämpfung von unerwünschtem Insekten- oder Milbenbefall und/oder zur Bekämpfung von phytopathogenen Pilzen, **dadurch gekennzeichnet, daß** man eine Suspension gemäß den Ansprüchen 4 bis 6 in Form eines Suspensionskonzentrates, eines wasserdispergierbaren Pulvers oder wasserdispergierbaren Granulates formuliert und eine wirksame Menge der hergestellten Formulierung auf unerwünschte Pflanzen, und/oder auf Pflanzen oder Saatgüter zur Regulation des Wachstums, und/oder auf den jeweiligen Schädling, die vor dem jeweiligen Schädling zu schützenden Materialen, Pflanzen, Böden oder Saatgüter appliziert.

## Claims

1. A process for the preparation of a suspension of low-melting point water-insoluble solid agrochemical active ingredients, which comprises
a) suspending 1-40% by weight of a silica-based carrier in 40 to 97% by weight of water in the presence of 1-40% by weight of anionic dispersant,
b) heating the suspension obtained in step a) to a temperature above that of the active ingredient, and
c) adding, with stirring, 1-25% by weight of the molten water-insoluble active ingredient with a melting point of <80°C or a mixture of molten water-insoluble active ingredients, where each component of the mixture has a melting point of <80°C,
where the quantities stated in a) and c) total 100% by weight.

2. A process as claimed in claim 1, wherein the active ingredient of step c) is selected from the group consisting of flufenacet, cyprodinil, dinocap, DNOC, dodemorph, dodemorph acetate, fenpropidin, fenpropimorph, flusilazole, imazalil, myclobutanil, nitrothal-isopropyl, penconazole, propamocarb hydrochloride, pyraclostrobin, spiroxamin, benfluralin, bromoxynil, clodinafop-propargyl, cyhalofop-butyl,dinoterb, DNOC, ethofumesate, fluoroglycofen-ethyl, flurochloridone, fluroxypyr-meptyl, haloxyfop-etotyl, haloxyfop-methyl, ioxynil octanoate, napropamide, oxyfuorifen, pendimethalin, propanil, pyridate, quizalofop-P-ethyl, quizalofop-P-tefuryl, trifluralin, alpha-cypermethrin, anilofos, azinphos-ethyl, azinphos-methyl, benzoximate, beta-cypermethrin, chlorpyrifos, cypermethrin, deltamethrin, dimethylvinphos, endosulfan, esfenvalerate, fenoxycarb, fenvalerate, flamprop-M-isopropyl, methoxychlor, metolcarb, monocrotophos, phosmet, pyridaphenthion, resmethrin, silafluofen, tetramethrin, thiofanox, triazamate, trichlorfon, trifloxystrobin and xylylcarb.

3. A process as claimed in claim 1, wherein the active ingredient of step c) is selected from the group consisting of pendimethalin, propanil pyraclostrobin and trifloxystrobin.

4. A suspension obtainable by the process as claimed in any of claims 1 to 3.

5. A suspension as claimed in claim 4, wherein a precipitated silica is used as the carrier.

6. A suspension as claimed in claim 4, wherein the dispersant is selected from the group of the lignosulfonates, of the condensates of sulfonated naphthalenes with formaldehyde or with formaldehyde and phenol and, if appropriate urea, and condensates of phenolsulfonic acid, formaldehyde and urea.

7. A process for the preparation of a suspension concentrate, which comprises mixing a suspension as claimed in any of claims 4 to 6 with one or more further agrochemical active ingredients and/or further formulation auxiliaries suitable for the preparation of the suspension concentrate.

8. A process for the preparation of a water-dispersible powder, which comprises
a) mixing a suspension as claimed in any of claims 4 to 6 with one or more further agrochemical active ingredients and/or further formulation auxiliaries suitable for the preparation of a water-dispersible powder, and
b) drying the mixture obtained in step a) and processing it to give a water-dispersible powder.

9. A process for the preparation of water-dispersible granules, which comprises
a) mixing a suspension as claimed in any of claims 4 to 6 with one or more further agrochemical active ingredients and/or further formulation auxiliaries suitable for the preparation of water-dispersible granules, and
b) processing the mixture obtained in step a) by means of a drying process to give water-dispersible granules.

10. A process as claimed in any of claims 7 to 9, wherein the further agrochemical active substance employed is one or more compounds selected from the group consisting of carbendazim, thiophanate-methyl, epoxiconazole, metconazole, prochloraz, propiconazole, quinoxyfen, folpan, captan, dimethomorph, kresoxim-methyl, azoxystrobin, picoxystrobin, IKF 916, iprovalicarb, proazolthion, metiram, mancozeb, dithianon, cyprodinil, N-methylphenyl-(E)-o-(2,5-dimethylphenoxymethyl)-2-methoxyiminoacetamide and
nicotinanilide derivatives of the formula I 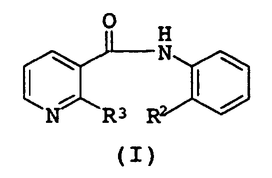 where
R² is halo-substituted phenyl and
R³ is halogen.

11. A process as claimed in any of claims 7 to 9, wherein the further agrochemical active ingredient used is one or more compounds selected from the group consisting of folpan, captan, metiram, mancozeb, dithianon, dimethomorph and nicotinanilide derivatives as set forth in claim 10.

12. A method of regulating the growth of plants and/or for controlling undesired plant growth and/or for controlling undesired attack by insects or mites and/or for controlling phytopathogenic fungi, which comprises formulating a suspension as claimed in any of claims 4 to 6 in the form of a suspension concentrate, a water-dispersible powder or water-dispersible granules and applying an effective amount of the resulting formulation to undesired plants and/or to plants or seed for regulating the growth and/or to the pest in question and/or to the materials, plants, soils or seeds to be protected from the pest in question.

## Revendications

1. Procédé pour la préparation d'une suspension de substances actives agrochimiques de bas point de fusion, insolubles dans l'eau, solides, **caractérisé**
a) en ce qu'on met en suspension 1 à 40% en poids d'un support à base de silice en présence de 1 à 40% en poids d'un dispersant anionique dans 40 à 97% en poids d'eau et
b) en ce qu'on chauffe la suspension obtenue dans l'étape a) à une température supérieure à la température de la substance active et
c) en ce qu'on mélange sous agitation avec 1 à 25% en poids de la substance active fondue, insoluble dans l'eau présentant un point de fusion < 80°C ou un mélange de substances actives fondues, insolubles dans l'eau, chaque partenaire du mélange présentant un point de fusion <80°C,
les quantités indiquées dans a) et c) se complétant à 100% en poids.

2. Procédé selon la revendication 1, **caractérisé en ce qu'**on choisit la substance active de l'étape c) dans le groupe constitué par le flufenacet, le cyprodinil, le dinocap, le DNOC, le dodémorphe, l'acétate de dodémorphe, la fenpropidine, le fenpropimorphe, le flusilazole, l'imazalil, le myclobutanil, le nitrothal-isopropyle, le penconazole, le chlorhydrate de propamocarb, la pyraclostrobine, la spiroxamine, la benfluraline, le bromoxynil, le clodinafop-propargyle, le cyhalofop-butyle, le dinoterb, le DNOC, l'éthofumésate, le fluoroglycofène-éthyle, la flurochloridone, le fluroxypyrmeptyle, l'haloxyfop-étotyle, l'haloxyfopméthyle, l'octanoate d'ioxynile, le napropamide, l'oxyfuorifène, la pendiméthaline, le propanil, le pyridate, le quizalofop-P-éthyle, le quizalofop-P-téfuryle, la trifluraline, l'alphacyperméthrine, l'anilofos, l'azinphos-éthyle, l'azinphos-méthyle, le benzoximate, la bêta-cyperméthrine, la chlorpyrifos, la cyperméthrine, la deltaméthrine, le diméthylvinphos, l'endosulfane, l'esfenvalérate, le fenoxycarb, le fenvalérate, le flamprop-M-isopropyle, le méthoxychlor, le métolcarb, le monocrotophos, le phosmet, la pyridaphenthione, la resméthrine, le silafluofène, la tétraméthrine, le thiofanox, le triazamate, le trichlorfon, la trifloxystrobine et le xylylcarb.

3. Procédé selon la revendication 1, **caractérisé en ce qu'**on choisit la substance active de l'étape c) dans le groupe constitué par la pendiméthaline, le propanil, la pyraclostrobine et la trifloxystrobine.

4. Suspension pouvant être obtenue via le procédé selon l'une quelconque des revendications 1 à 3.

5. Suspension selon la revendication 4, **caractérisée en ce qu'**on utilise comme substance support une silice précipitée.

6. Suspension selon la revendication 4, **caractérisée en ce qu'**on choisit le dispersant dans le groupe des ligninesulfonates, des produits de condensation des naphtalènes sulfonés avec du formaldéhyde ou du formaldéhyde et du phénol et le cas échéant de l'urée ainsi que des produits de condensation de l'acide phénolsulfonique, du formaldéhyde et de l'urée.

7. Procédé pour la préparation d'un concentrat d'une suspension, **caractérisé en ce qu'**on mélange une suspension selon les revendications 4 à 6 avec une ou plusieurs substances actives agrochimiques et/ou d'autres adjuvants de formulation appropriés pour la préparation d'un concentrat d'une suspension.

8. Procédé pour la préparation d'une poudre dispersible dans l'eau, **caractérisé**
a) en ce qu'on mélange une suspension selon les revendications 4 à 6 avec une ou plusieurs autres substances actives agrochimiques et/ou autres adjuvants de formulation appropriés pour la préparation d'une poudre dispersible dans l'eau et
b) en ce qu'on sèche le mélange obtenu dans l'étape a) et on le transforme en une poudre dispersible dans l'eau.

9. Procédé pour la préparation d'un granulat dispersible dans l'eau, **caractérisé**
a) en ce qu'on mélange une suspension selon les revendications 4 à 6 avec une ou plusieurs substances actives agrochimiques et/ou autres adjuvants de formulation appropriés pour la préparation d'un granulat dispersible dans l'eau et
b) en ce qu'on transforme le mélange obtenu dans l'étape a) au moyen d'un procédé de séchage en un granulat dispersible dans l'eau.

10. Procédé selon les revendications 7 à 9, **caractérisé en ce qu'**on utilise comme autre substance active agrochimique un ou plusieurs composés choisis dans le groupe constitué par le carbendazim, le thiophanateméthyle, l'époxiconazol, le metconazol, le prochloraz, le propiconazol, le quinoxyfène, le folpan, le captan, le diméthomorphe, le crésoximeméthyle, l'azoxystrobine, la picoxystrobine, l'IKF 916, l'iprovalicarb, la proazolthione, le métiram, le mancozeb, la dithianone, le cyprodinil, l'(E)-o-(2,5-diméthylphénoxyméthyl)-2-méthoxyimino-N-méthylphénylacétamide et
les dérivés de l'anilide de l'acide nicotinique de formule II 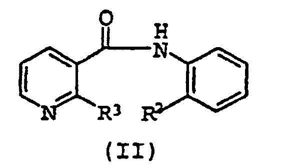 dans laquelle
R² représente un groupe phényle halogénosubstitué et
R³ représente un atome d'halogène.

11. Procédé selon les revendications 7 à 9, **caractérisé en ce qu'**on utilise comme autre substance active agrochimique un ou plusieurs composés choisis dans le groupe constitué par le folpan, le captan, le métiram, le mancozeb, la dithianone, le diméthomorphe et les dérivés de l'anilide de l'acide nicotinique selon la revendication 10.

12. Procédé pour la régulation de la croissance de plantes et/ou pour la lutte contre une croissance non souhaitée de plantes et/ou pour la lutte contre une attaque non souhaitée par des insectes ou des acariens et/ou pour la lutte contre les champignons phytopathogènes, **caractérisé en ce qu'**on formule une suspension selon les revendications 4 à 6 sous forme d'un concentrat d'une suspension, d'une poudre dispersible dans l'eau ou d'un granulat dispersible dans l'eau et on applique une quantité active de la formulation préparée sur les plantes non souhaitées et/ou sur les plantes ou les graines pour la régulation de la croissance et/ou sur les différents organismes nuisibles, sur les matériaux, les plantes, les sols ou les graines à protéger contre les différents organismes nuisibles.
